# EUROPEAN PATENT APPLICATION

(11) **EP 2 642 647 A1**
(43) Date of publication of application: **25.09.2013**
(21) Application number: 12160697.4
(22) Date of filing: 22.03.2012
(51) Int. Cl.: H02K 15/02, H02K 1/18

(54) **Stator and method for manufacturing a stator**

(71) Applicant: Alstom Technology Ltd, 5400 Baden (CH)
(72) Inventor: Munk, Tobias, 5306 Teferfelden (CH); Scherf, Gunter, 5242 Birr (CH)

(57) **Abstract**

The method for manufacturing a stator (1) comprises providing a first press plate (3), providing a casing (2) in a vertical configuration above the first press plate (3), connecting key bars (6) to the casing (2), providing a plurality of sheets (4) within the casing (2) connected to the at least a key bar (6), providing a second press plate (7) at the top of the casing (2). The method also comprises connecting the key bars (6) to the casing (2) by adjustable elements (9), and adjusting the key bar configuration after the key bars (6) are connected to the casing (2) and before the sheets (4) are provided into the casing (2).

## Description

### TECHNICAL FIELD

The present disclosure relates to a stator and a method for manufacturing a stator. The stator is a part of an electric machine such as a synchronous or asynchronous electric generator or a synchronous or asynchronous electric motor. Other kinds of electric machines are anyhow possible.

### BACKGROUND

In order to manufacture a stator of a large electric machine, usually a casing is positioned in the vertical configuration with a press plate at its bottom. Then key bars are welded to the casing and metal sheets are inserted one by one into the casing. Finally a second press plate is provided at the top of the metal sheets.

The key bars are used to align the metal sheets one another, for this reason the positioning of the key bars within the casing must be precise.

In addition, the key bars must have a good electric contact with the metal sheets to prevent eddy currents and hot spots.

In order to obtain a connection of the key bars to the casing with the required features, the welding time can be very long.

In fact welding can cause distortions of the interested parts, such that once a key bar is welded to the casing its positioning and/or features (for example its straightness or dimensional tolerances) have to be checked. In case positioning and/or features can not be accepted, the key bar must be removed, grinded and re-welded.

### SUMMARY

An aspect of the disclosure includes providing a stator and a method by which manufacturing of the stator is easy and quick, in particular when compared to the known methods.

### BRIEF DESCRIPTION OF THE DRAWINGS

Further characteristics and advantages will be more apparent from the description of a preferred but non-exclusive embodiment of the stator and method, illustrated by way of non-limiting example in the accompanying drawings, in which:

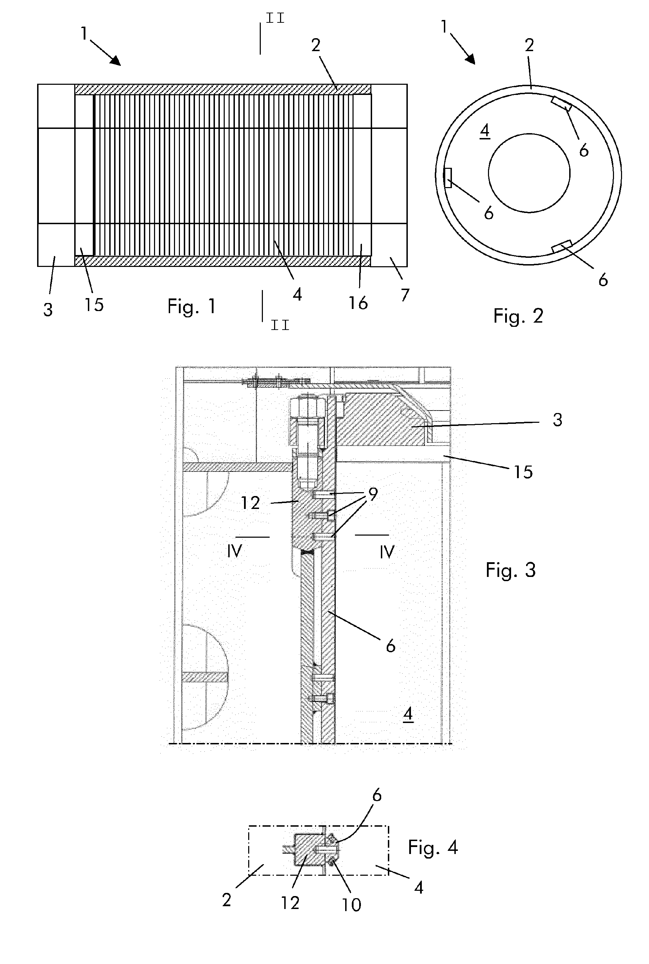

Figure 1 is a schematic longitudinal section of a stator of an electric machine,
Figure 2 is a cross section of the stator of figure 2 through line II-II of figure 1;
Figure 3 is a longitudinal section of a part of the stator;
Figure 4 is a cross section through line IV-IV of figure 3;
Figures 5 through 12 show the steps of the method.

### DETAILED DESCRIPTION OF EXEMPLARY EMBODIMENTS

In the following a stator of an electric machine such as an electric generator or an electric motor is described first.

The stator 1 comprises a casing 2 for example having a cylindrical configuration; the casing 2 has a first press plate 3 at one end.

Within the casing 2, a plurality of sheets 4 that define the stator core are provided; the sheets 4 are usually metal sheets and are connected to one or more key bars 6.

A second press plate 7 is provided at another end of the casing 2.

The key bars 6 are connected to the casing 2 by adjustable elements 9.

In addition, wedges 10 are provided between the key bars 6 and the sheets 4; this improves electric and mechanical connection between the key bars 6 and the sheets 4.

The key bars 6 are connected to the casing 2; for example the casing 2 has key bar carriers 12 and each key bar 6 is connected to a key bar carrier 12. The key bar carriers 12 are bars connected (for example welded) to the rest of the casing 2, such that they define a solid component.

The press plates 3, 7 are advantageously connected to the key bar carriers 12.

The adjustable elements 9 can be any, for example they can include screws and/or pins and/or bolts.

In a preferred embodiment, no tension bars to connect the press plates 3, 7 together separate from the key bar carriers 12 are provided. This proved to be advantageous because when separate tension bars to connect the press plates together are provided, they are housed in holes drilled in the sheets 4, such that the electrically used surface of the metal sheets (i.e. the cross section of the stator core) is reduced. For this reason, preferably the stator is a stator of a four pole electric machine.

As known the cross sections of a stator core of a four pole machine is smaller that the cross section of a stator core of a two pole machine, thus the advantageous effect achieved in a stator of a four pole machine is higher than in a stator of a two pole machine. It is anyhow clear that an advantageous effect is also achieved in a stator of a two pole machine.

In addition, spacers 15, 16 can be provided between each press plate 3, 7 and the sheets 4.

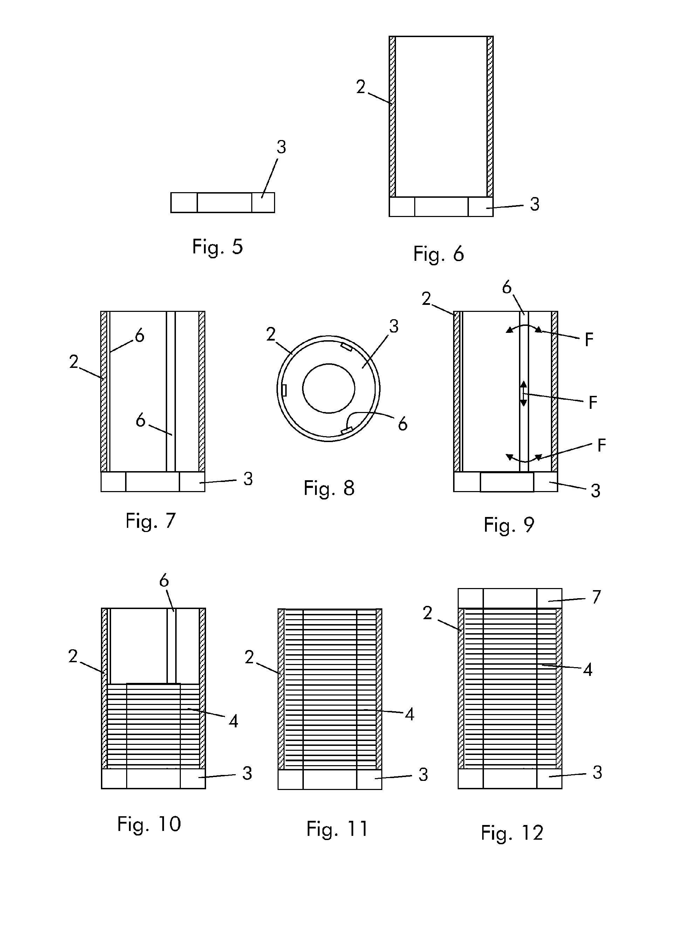

The method for manufacturing the stator 1 comprises the following steps:
providing a first press plate 3 (figure 5),
providing a casing 2 in a vertical configuration above the first press plate 3 (figure 6),
connecting key bars 6 to the casing 2 (figures 7, 8),
providing a plurality of sheets 4 within the casing 2 connected to the key bars 6 (figures 10 and 11) to define the stator core,
providing a second press plate 7 at the top of the casing 2 (figure 12).

Preferably, the key bars 6 are connected to the casing 2 by the adjustable elements 9 such as screws and/or pins and/or others, and the configuration of the key bars 6 is adjusted after the key bars 6 are connected to the casing 2 and before the sheets 4 are provided into the casing 2 (figure 9). Arrows F indicate possible adjustments that can be carried out.

Since the key bars 6 are connected by removable elements 9 and since their configuration can be easily adjusted, the total assembling time can be sensibly reduced when compared to the traditional methods.

In addition, since the removable elements 9 allow an easier connection, they allow a better electric contact to be achieved between the key bars 6 and the metal sheets 4 (or key bar carrier 12); anyhow, when the electrical connection (i.e. resistance) is not acceptable, removal and re-connection of the key bars 6 is easy and fast.

Then wedges 10 can be provided between the key bars 6 and the metal sheets 4 to improve mechanical and electrical connection (i.e. improve stiffness and reduce electric resistance) between the key bars 6 and the metal sheets 4.

The press plates 3, 7 are then connected to the casing 2 (in particular to the key bar carriers 12 that are part of the casing 2) and spacers 15, 16 are preferably provided between each press plate 3, 7 and the sheets 4. This last step is anyhow not mandatory.

Naturally the features described may be independently provided from one another.

In practice the materials used and the dimensions can be chosen at will according to requirements and to the state of the art.

### REFERENCE NUMBERS

- 1: stator
- 2: casing
- 3: press plate
- 4: sheet
- 6: key bar
- 7: press plate
- 9: adjustable element
- 10: wedge
- 12: key bar carrier
- 15: spacer
- 16: spacer
- F: adjustment

## Claims

1. A method for manufacturing a stator (1) comprising providing a first press plate (3),
providing a casing (2) in a vertical configuration above the first press plate (3),
connecting at least a key bar (6) to the casing (2), providing a plurality of sheets (4) within the casing (2) connected to the at least a key bar (6), providing a second press plate (7) at the top of the casing (2),
**characterised by**
connecting the at least a key bar (6) to the casing (2) by adjustable elements (9), and
adjusting the at least a key bar configuration after the at least a key bar (6) is connected to the casing (2) and before the sheets (4) are provided into the casing (2).

2. The method of claim 1, **characterised by** providing at least a wedge (10) between the at least a key bar (6) and the sheets (4).

3. The method of claim 1, **characterised by** connecting the press plates (3, 7) to the casing (2).

4. The method of claim 1, **characterised by** providing a spacer (15, 16) between at least a press plate (3, 7) and the sheets (4).

5. A stator (1) comprising
a casing (2),
a first press plate (3) at an end of the casing (2),
a plurality of sheets (4) within the casing (2) connected to at least a key bar (6),
a second press plate (7) at another end of the casing (2),
**characterised in that**
the at least a key bar (6) is connected to the casing (2) by adjustable elements (9).

6. The stator (1) of claim 5, **characterised in that** at least a wedge (10) is provided between the at least a key bar (6) and the sheets (4).

7. The stator (1) of claim 5, **characterised in that** the key bars (6) are connected to the casing (2).

8. The stator (1) of claim 5, **characterised in that** the casing (2) has at least a key bar carrier (12), each key bar (6) being connected to a key bar carrier (12).

9. The stator (1) of claim 8, **characterised in that** the key bar carrier (12) comprises at least a bar connected to the rest of the casing (2).

10. The stator (1) of claim 8, **characterised in that** the press plates (3, 7) are connected to the at least a key bar carrier (12).

11. The stator (1) of claim 5, **characterised in that** the adjustable elements (9) include at least a screw.

12. The stator (1) of claim 5, **characterised in that** the adjustable elements (9) include at least a pin.

13. The stator (1) of claim 5, **characterised in that** no bars to connect the press plates (3, 7) together, separate from the at least a key bar carrier (12) are provided.

14. The stator (1) of claim 5, **characterised by** being a stator for a four pole electric machine.

15. The stator (1) of claim 5, **characterised by** comprising a spacer (15, 16) between at least a press plate (3, 7) and the sheets (4).
